# EUROPÄISCHE PATENTSCHRIFT

(11) **EP 0 554 833 B1**
(45) Veröffentlichungstag und Bekanntmachung des Hinweises auf die Patenterteilung: **17.11.1999**
(21) Anmeldenummer: 93101576.2
(22) Anmeldetag: 02.02.1993
(51) Int. Cl.: A01N 43/653, B27K 3/50

(54) **Synergistische Kombinationen von Cyproconazol**
Synergistic combinations of cyproconazole
Combinaisons synergiques de cyproconazole

(30) Priorität: 04.02.1992 DE 4203090
(43) Veröffentlichungstag der Anmeldung: 11.08.1993
(73) Patentinhaber: Novartis AG, 4058 Basel (CH); Novartis-Erfindungen Verwaltungsgesellschaft m.b.H., 1230 Wien (AT)
(72) Erfinder: Rustenburg, Gerbrand, NL-2104 CB Heemstede (NL); Klaver, Cor J., Dr., NL-1402 SL Bussum (NL)

(56) Entgegenhaltungen:
- EP-A- 0 237 764
- EP-A- 0 255 987
- EP-A- 0 328 466
- EP-A- 0 336 186
- EP-A- 0 484 279
- FR-A- 2 609 366
- GB-A- 2 199 749
- CHEMICAL PATENTS INDEX, BASIC ABSTRACTS JOURNAL Section Ch, Week 8637, 5. November 1986 Derwent Publications Ltd., London, GB; Class C, AN 86-239113/37 & BE-A-904 660 (JANSSEN PHARMACEUTICA)

## Beschreibung

Die in neuerer Zeit aufgefundenen Fungizide vom Typ des Cyproconazols verfügen über eine gute fungizide Wirkung (vgl. US-Patent 4,849,439) und wirken sowohl gegen humane und animale Dermatophyten als auch gegen phytopathogene Pilze.

Aus der BE-A-904660 kennt man bestimmte dem Cyproconazol verwandte fungizide Triazole wie z.B. Azaconazol in Kombination mit quaternären Ammoniumsalzen.

Der GB-A-2199749 entnimmt man, daß Cyproconazol eine bemerkenswerte fungizide Aktivität gegen Pilze und Bakterien aufweist, die Infektionen an Baumschnittwunden hervorrufen. Ferner wird offenbart, daß man Cyproconazol mit weiteren Fungiziden, insbesondere solchen vom Benzimidazoltyp zusammen anwenden kann. Außerdem wird dort erwähnt, daß es auch mit geeigneten Bakteriziden gemeinsam angewendet werden kann, u.a. bakteriziden quaternären Ammoniumsalzen, wie Cetyltrimethylammoniumchlorid.

Der FR-A-2609366 entnimmt man, daß Cyproconazole als spezielle Formulierung zur Behandlung von Baumschnittwunden-Infektionen geeignet sind. Besonders geeignet ist Carbendazim in Kombination mit Cetyltrimethylammoniumchlorid.

Es wurden nun neue fungizide Mittel auf der Basis von Cyproconazol und quaternären Ammoniumsalzen gefunden, die überraschend starke synergistische Wirkungen bei der Bekämpfung und Vorbeugung von holzzerstörenden Pilzen aufweisen.

Der Einsatz von Mischungen, die synergistische Effekte verursachen, ist mit großen wirtschaftlichen, aber auch ökologischen Vorteilen verbunden.

Unter Synergismus versteht man die sich gegenseitig verstärkende Wirkung von zwei oder auch mehr Stoffen. Im vorliegenden Fall bewirkt die kombinierte Anwendung von zwei Fungiziden, daß die Aufwandmenge der Fungizide reduziert werden kann und trotzdem die gleiche fungizide Wirkung erreicht wird bzw. daß mit den gleichen Aufwandmengen der Fungizide eine höhere als die zu erwartende additive Wirkung der einzeln eingesetzten Wirkstoffe erzielt wird.

Durch Nutzung solcher synergistischer Effekte können die Aufwandmengen der beteiligten Mischungspartner erheblich reduziert werden und es gelingt, ein breites Spektrum holzzerstörender Pilze zu bekämpfen. Die Reduktion der Aufwandmengen betrifft die quaternären Ammoniumsalze, aber auch das Cyproconazol.

Im vorliegenden Falle wird Cyproconazol mit Verbindungen kombiniert, welche die Wirkung des Fungizids erheblich verstärken, weswegen es möglich ist, mit einer geringeren Konzentration des Fungizids die gleiche Wirkung zu erzielen. Darüber hinaus wirken die erfindungsgemäßen Kombinationen auch noch bei niedrigen Aufwandmengen. Sie eignen sich deshalb vorzüglich zur Bekämpfung von Holzpilzen in Holz und Mauerwerk.

Gegenstand der vorliegenden Erfindung sind somit fungizide Mittel, die gekennzeichnet sind durch einen Gehalt an
A) Cyproconazol (Formel I) 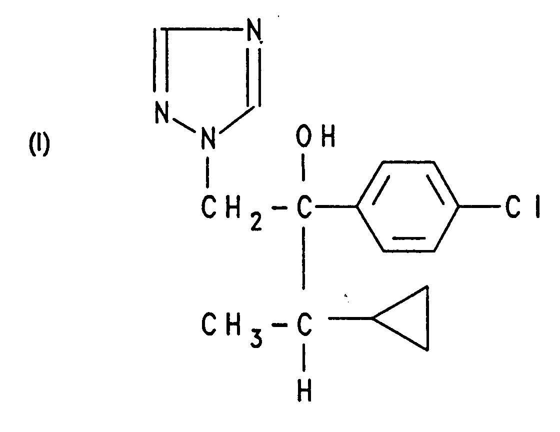 in Kombination mit
B) anorganischen oder organischen Ammoniumsalzen der Formel II, 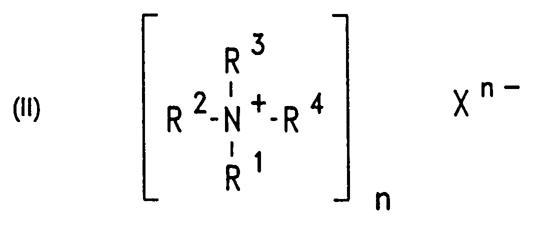 worin R¹ - R⁴ gleich oder verschieden sind und einen über eine C-N-Bindung gebundenen organischen Substituenten mit bis zu 18 C-Atomen bedeuten oder drei der Reste R¹ - R⁴ zusammen mit dem N-Atom ein heteroaromatisches System, wie z.B. Pyridinium, bilden, Xⁿ⁻ das Anion einer anorganischen oder organischen n-basigen Säure und n 1, 2 oder 3 ist, ausgenommen Cetyltrimethylammoniumchlorid, wobei die Verbindungen der Formeln I und II die einzig fungizid wirksamen Bestandteile des Mittels sind.

Bei den Verbindungen vom Typ B handelt es sich vorzugsweise um Ammoniumsalze, worin R¹ - R⁴ gleich oder verschieden sind und (C₁ - C₁₈)-Alkyl, (C₇ - C₁₃)-Aralkyl, wie Benzyl, (C₁ - C₆)-Alkoxy-(C₁ - C₁₂)-alkyl, [-CH₂-CH₂-O]ₓ-H oder [-CH(CH₃)-CH₂-O]ₓ-H und x = 1, 2 oder 3 ist, bedeuten. Besonders bevorzugt sind Salze, worin R¹ und R² jeweils (C₁ - C₄)-Alkyl, insbesondere Methyl, R³ und R⁴ jeweils (C₈ - C₁₂)-Alkyl, insbesondere Decyl. Als Anionen Xⁿ⁻ werden bevorzugt Cl⁻, Br⁻, SO₄²⁻, HSO₄⁻, PO₄⁵⁻,, HPO₄²⁻, H₂PO₄⁻, CH₃COO⁻, COO₂²⁻, SCN⁻, insbesondere Cl⁻.

Gegenstand der Erfindung ist auch ein Verfahren zur Bekämpfung von schädlichem Pilzbewuchs auf Holz, welches dadurch gekennzeichnet ist, daß man auf das zu behandelnde Holz eine wirksame Menge einer synergistischen Mischung bestehend aus der Verbindung Cyproconazol der Formel I 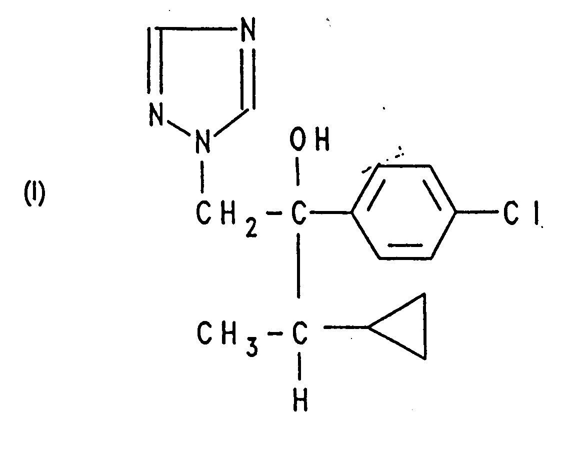 in Kombination mit Verbindungen der Formel II 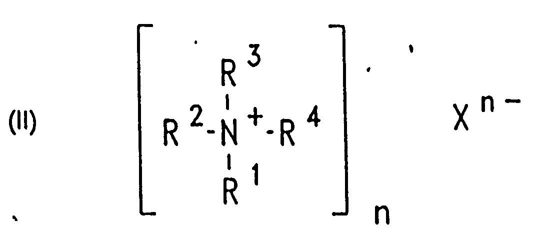 worin R¹ - R⁴ gleich oder verschieden sind und einen über eine C-N-Bindung gebundenen organischen Substituenten mit bis zu 18 C-Atomen bedeuten oder drei der Beste R¹ - R⁴ zusammen mit dem N-Atom ein heteroaromatisches System bilden, Xⁿ⁻ das Anion einer anorganischen oder organischen n-basigen Säure und n 1, 2 oder 3 ist, aufbringt.

Die meisten holzzerstörenden Pilze gehören zu den Basidiomycetes, es kommen jedoch auch Ascomycetes und Deuteromycetes vor. Die erfindungsgemäßen Mittel werden vorzugsweise gegen Basidiomyceten, z.B. gegen Coniophora, Gloephyllum, Poria, Serpula und Coriolus eingesetzt. Die folgenden Anwendungsgebiete sind von besonderem Interesse: Präventive und kurative Behandlung von Holz, sowie kurative Behandlung von Holz und Mauerwerk.

Die Verbindungen vom Typ B können mit Cyproconazol zu mehreren kombiniert werden. Cyproconazol und quaternäre Ammoniumsalze sind im Handel erhältlich.

Die Mischungsverhältnisse der einzelnen Komponenten können in den erfindungsgemäßen Kombinationen innerhalb weiter Grenzen schwanken. Aus praktischen Gründen wählt man Mengenverhältnisse jedoch zwischen 1:2,5 bis 1:25, vorzugsweise zwischen 1:4 und 1:6.

Die erfindungsgemäßen Mischungen können als wasserverdünnbare Konzentrate, die dann in üblicher Weise mit Wasser verdünnt zur Anwendung gebracht werden, oder als sogenannte Tankmischungen vorliegen, die durch gemeinsame Verdünnung der getrennt formulierten Komponenten mit Wasser unmittelbar vor der Anwendung hergestellt werden. Ebenso können sie als wäßrige Fertiglösungen ausgebracht werden.

Die Aufwandmengen der Fungizide vom Typ A in den Wirkstoffmischungen liegen im allgemeinen zwischen 1 g/l und 100 g/l, die Aufwandmengen von B zwischen 5 g/l und 500 g/l; die Gesamtmenge an aufzuwendender Produktkombination beträgt 15 l/m³ bis 600 l/m³ Holz.

Die erfindungsgemäßen Mittel können in den üblichen, dem Fachmann geläufigen, Zubereitungen in den Handel gebracht werden. Sie werden bevorzugt als wasserverdünnbare Konzentrate oder Fertiglösungen in den Handel gebracht. Die formulierten Mittel enthalten dabei die erfindungsgemäßen Wirkstoffkombinationen beispielsweise zu 0,1 bis 50 Gew.-%.

Als Inertmittel kann z.B Glycolsäure-n-butylester, Polyglycolether oder Dipropylenglycolmonoethylether verwendet werden.

Bei fungiziden Mitteln können die Konzentrationen der Wirkstoffe in den handelsüblichen Formulierungen verschieden sein. Bei emulgierbaren Konzentraten ist die Wirkstoffkonzentration etwa 1 bis 50 %.

Zur Anwendung werden die handelsüblichen Konzentrate gegebenenfalls in üblicher Weise verdünnt. Mit dem Anwendungsgebiet, z.B. zur Behandlung von Holz ohne oder mit Boden- oder Wasserkontakt, variiert die erforderliche Aufwandmenge und Konzentration.

Eine Kombination der Wirkstoffe bedeutet, daß die fungiziden Wirkstoffe gemeinsam ausgebracht oder als sogenannte split-Applikation einige Tage nacheinander ausgebracht werden.

Die erfindungsgemäßen Mittel können bei Bedarf mit anderen Wirkstoffen, vorzugsweise mit Fungiziden und Insektiziden kombiniert werden. Sofern nichts anderes angegeben wird, bedeuten %-Angaben Gewichtsprozente. Die Erfindung wird durch das nachfolgenden Beispiel erläutert, ohne daß diese darauf beschränkt wäre:

### Beispiel

### Bestimmung der Wirksamkeit von Cyproconazol in Kombination mit Dimethyldidecylammoniumchlorid gegen holzzerstörende Basidiomyceten.

Die Untersuchungen der Wirkstoffe wurden nach den Europäischen Prüfnormen EN 84 (1979) und 113 (1986) durchgeführt. Die Behandlung mit den Wirkstoffen verhindert eine Zerstörung des Holzes. Die Wirkung der Behandlung wird indirekt über den nicht stattfindenden Gewichtsverlust der Probehölzer quantifiziert.

Als Probehölzer wurde Kiefernsplintholz, als Prüfpilze wurden Coniophora puteana (Kellerschwamm), Poria plazenta (Fleischfarbener Porenschwamm), Gloeophyllum trabeum (Balkenblättling) und Trametes (Coriolus) versicolor (Schmetterlings-Tramete) verwendet. Deutlich geringere Mengen der erfindungsgemäßen Kombination von Cyproconazol (A: 2-(4-chlorophenyl)-3-cyclopropyl-3-methyl-1-(1H-1,2,4-triazol-1-yl)-butan-2-ol)) und Dimethyldidecyl-ammoniumchlorid (B1) erzielen das gleiche Resultat (0% Gewichtsverlust) wie Cyproconazol oder B1 alleine. Vergleichbare Resultate wurden auch mit Buche als Probeholz erzielt.

**Tabelle**

| Kiefernsplintholz | | | |
|---|---|---|---|
| Pilze | Menge (g/m³) aktive Substanz bei 0% Gewichtsverlust | | |
| | A+B1 | A | B1 |
| Coniophora | 121 g + | 247 g | 12 415 g |
| | 605 g | | |
| Gloephyllum | 119.5g + | 247 g | 12 505 g |
| | + 597.5 g | | |
| Poria | 121 g + | 243 g | 3 175 g |
| | 605 g | | |
| Coriolus | 105 g + | 418 g | 2 675 g |
| | 525 g | | |

## Patentansprüche

1. Fungizide Mittel, gekennzeichnet durch einen synergistisch wirksamen Gehalt an
A) Cyproconazol der Formel I 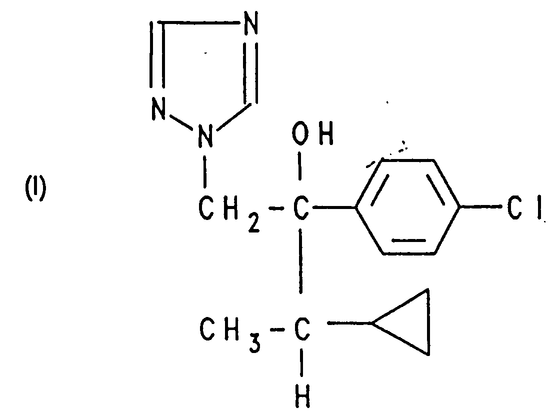 in Kombination mit
B) anorganischen oder organischen Ammoniumsalzen der Formel II, 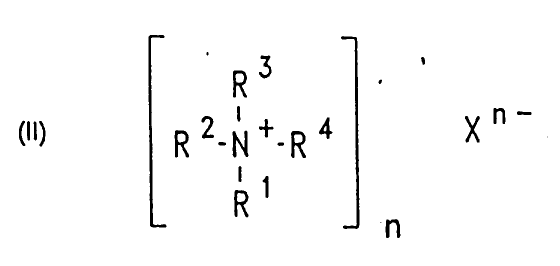 worin R¹ - R⁴ gleich oder verschieden sind und einen über eine C-N-Bindung gebundenen organischen Substituenten mit bis zu 18 C-Atomen bedeuten oder drei der Reste R¹ - R⁴ zusammen mit dem N-Atom ein heteroaromatisches System bilden, Xⁿ⁻ das Anion einer anorganischen oder organischen n-basigen Säure und n 1, 2 oder 3 ist, ausgenommen Cetyltrimethylammoniumchlorid, wobei die Verbindungen der Formeln I und II die einzig fungizid wirksamen Bestandteile des Mittels sind.

2. Fungizide Mittel gemäß Anspruch 1, dadurch gekennzeichnet, daß sie die Wirkstoffe A und B im Gewichtsverhältnis 1:2,5 bis 1:25 enthalten.

3. Fungizide Mittel nach Anspruch 2, dadurch gekennzeichnet, daß das Gewichtsverhältnis A:B 1:4 bis 1:6 beträgt.

4. Fungizide Mittel nach Anspruch 1, 2 oder 3, dadurch gekennzeichnet, daß sie 0,1 bis 50 Gew.-% Wirkstoffgemisch und übliche Formulierungshilfsmittel für Zubereitungen als versprühbare Lösungen enthalten.

5. Verfahren zur Bekämpfung von schädlichem Pilzbewuchs auf Holz, dadurch gekennzeichnet, daß man auf das zu behandelnde Holz eine wirksame Menge einer syngeristischen Mischung bestehend aus der Verbindung Cyproconazol der Formel I 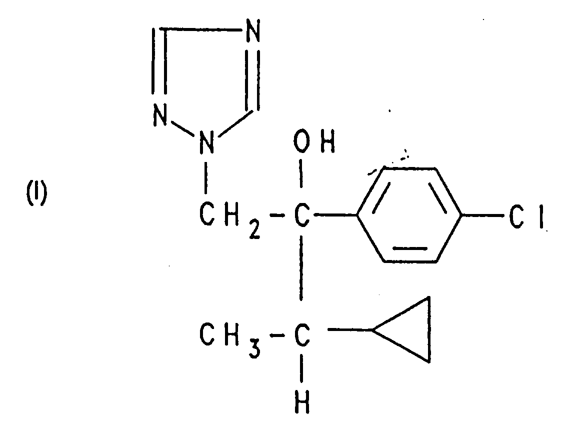 in Kombination mit Verbindungen der Formel II 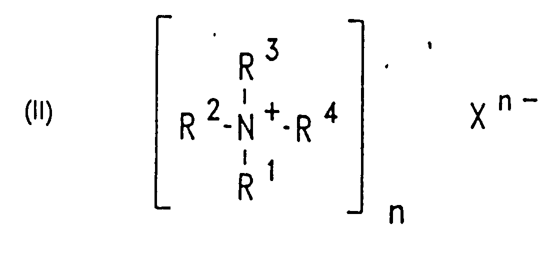 worin R¹ - R⁴ gleich oder verschieden sind und einen über eine C-N-Bindung gebundenen organischen Substituenten mit bis zu 18 C-Atomen bedeuten oder drei der Reste R¹ - R⁴ zusammen mit dem N-Atom ein heteroaromatisches System bilden, Xⁿ⁻ das Anion einer anorganischen oder organischen n-basigen Säure und n 1, 2 oder 3 ist, aufbringt.

6. Verfahren gemäß Anspruch 5, dadurch gekennzeichnet, daß man die Wirkstoffe der Formeln I und II im Gewichtsverhältnis 1:2,5 bis 1:25 anwendet.

7. Verfahren nach Anspruch 6, dadurch gekennzeichnet, daß man die Wirkstoffe der Formeln I und II im Gewichtsverhältnis 1:4 bis 1:6 anwendet.

8. Verfahren nach Anspruch 6 oder 7, dadurch gekennzeichnet, daß man die synergistische Mischung in einer Aufwandmenge von 15 bis 600 l/m³ Holz aufbringt.

9. Verfahren gemäß Anspruch 6, 7 oder 8, dadurch gekennzeichnet, daß man Spritzbrühen anwendet, die 1 bis 100 g/l der Verbindung der Formel I und 5 bis 500 g/l einer Verbindung der Formel II enthalten.

10. Verwendung einer synergistisch wirksamen Kombination der Verbindungen der Formeln I und II gemäß Anspruch 1 zur Bekämpfung von holzzerstörenden Pilzen, dadurch gekennzeichnet, daß die Wirkstoffe gemeinsam oder kurz nacheinander ausgebracht werden.

## Claims

1. Fungicidal composition characterised by a synergistically effective content of
A) cyproconazole of formula I 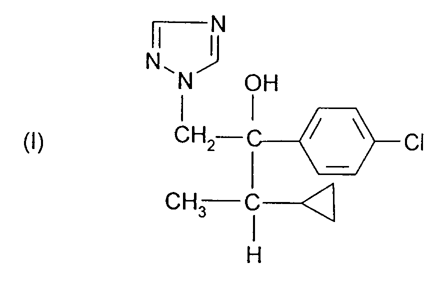 in combination with
B) inorganic or organic ammonium salts of formula II 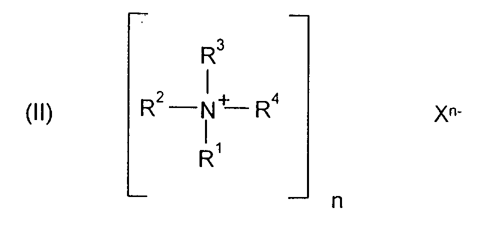 in which R¹-R⁴ are identical or different and are an organic substituent which has up to 18 carbon atoms and which is bonded by a carbon-nitrogen bond, or three of the radicals R¹-R⁴ together with the nitrogen atom form a heteroaromatic system, Xⁿ⁻ is the anion of an inorganic or organic n-basic acid, and n is 1, 2 or 3, with the exception of cetyltrimethylammonium chloride, whereby the compounds of formulae I and II are the only fungicidally active components of the composition.

2. Fungicidal compositions as claimed in claim 1, which comprise the active substances A and B in a weight ratio of 1:2.5 to 1:25.

3. Fungicidal compositions as claimed in claim 2, wherein the weight ratio of A:B is 1:4 to 1:6.

4. Fungicidal compositions as claimed in claim 1, 2 or 3, which comprise 0.1 to 50 % by weight of active substance mixture and conventional formulation excipients for preparations as sprayable solutions.

5. A method of controlling harmful fungal growth on wood, which comprises applying an effective amount of a synergistic mixture comprising the compound cyproconazole of formula I 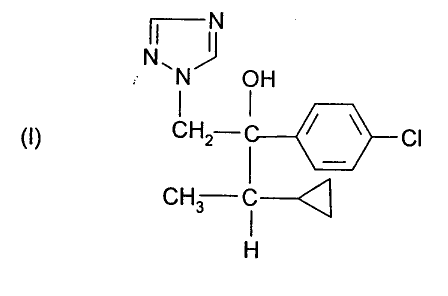 in combination with compounds of formula II 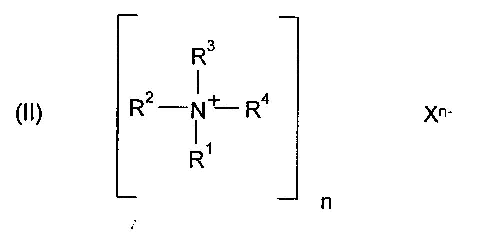 in which R¹-R⁴ are identical or different and are an organic substituent which has up to 18 carbon atoms and which is bonded by a carbon-nitrogen bond, or three of the radicals R¹-R⁴ together with the nitrogen atom form a heteroaromatic system, Xⁿ⁻ is the anion of an inorganic or organic n-basic acid, and n is 1, 2 or 3, is applied to the wood to be treated.

6. The method as claimed in claim 5, wherein the active substances of formulae I and II are applied in a weight ratio of 1:2.5 to 1:25.

7. The method as claimed in claim 6, wherein the active substances of formulae I and II are applied in a weight ratio of 1:4 to 1:6.

8. The method as claimed in claim 6 or 7, wherein the synergistic mixture is applied at an application rate of 15 to 600 l/m³ wood.

9. The method as claimed in claim 6, 7 or 8, which comprises using spray mixtures that contain 1 to 100 g/l of the compound of formula I and 5 to 500 g/l of a compound of formula II.

10. The use of a synergistically effective combination of the compounds of formulae I and II as claimed in claim 1 for the control of wood-destroying fungi, whereby the active substances are applied concomitantly or shortly after one another.

## Revendications

1. Des agents fongicides, caractérisés par une teneur efficace du point de vue synergique
A) en cyproconazole de formule I 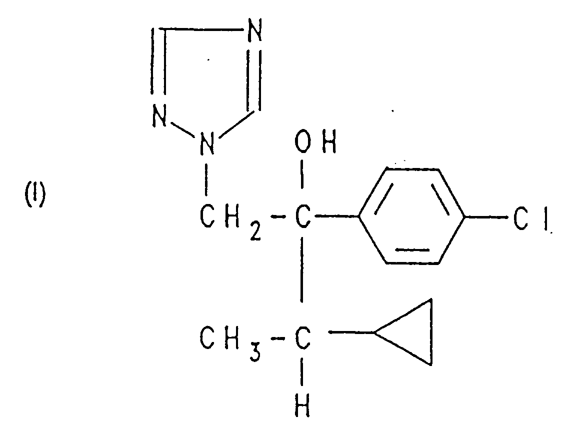 en combinaison avec
B) des sels d'ammonium minéraux ou organiques de formule II 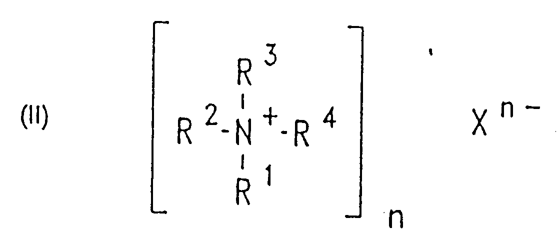 où R¹ - R⁴ sont identiques ou différents et signifient un substituant organique ayant jusqu'à 18 atomes de carbone qui est lié par une liaison C-N ou bien trois des restes R¹-R⁴, ensemble avec l'atome d'azote, forment un système hétéroaromatique, Xⁿ⁻signifie l'anion d'un acide n-basique minéral ou organique et n signifie 1, 2 ou 3, sauf le chlorure de cétyltriméthylammonium, les composés de formule I et II étant les seuls constituants actifs du point de vue fongicide de l'agent.

2. Des agents fongicides selon la revendication 1, caractérisés en ce qu'ils contiennent les matières actives A et B dans un rapport pondéral de 1:2,5 à 1:25.

3. Des agents fongicides selon la revendication 2, caractérisés en ce que le rapport pondéral de A:B est de 1:4 à 1:6.

4. Des agents fongicides selon la revendication 1, 2 ou 3, caractérisés en ce qu'ils contiennent 0,1 à 50% en poids du mélange de matières actives et des auxiliaires de formulation habituels pour des préparations sous forme de solutions pulvérisables.

5. Un procédé de lutte contre la croissance de champignons nuisibles sur le bois, caractérisé en ce qu'on applique sur le bois à traiter une quantité efficace d'un mélange synergique constitué du composé cyproconazole de formule I 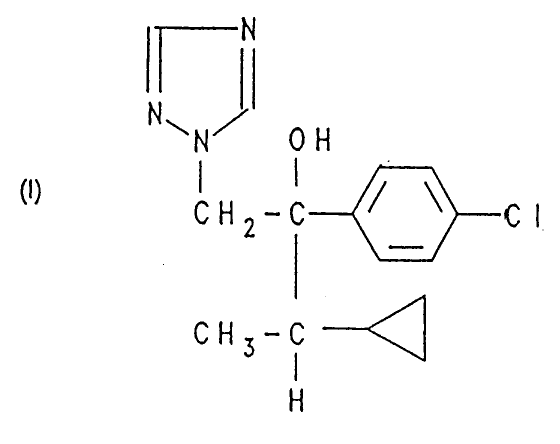 en combinaison avec des composés de formule II 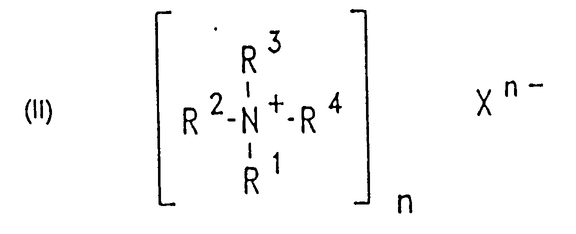 où R¹ - R⁴ sont identiques ou différents et signifient un substituant organique ayant jusqu'à 18 atomes de carbone qui est lié par une liaison C-N ou bien trois des restes R¹- R⁴, ensemble avec l'atome d'azote, forment un système hétéroaromatique, Xⁿ⁻signifie l'anion d'un acide n-basique minéral ou organique et n signifie 1, 2 ou 3.

6. Un procédé selon la revendication 5, caractérisé en ce qu'on utilise les matières actives de formule I et II dans un rapport pondéral de 1:2,5 à 1:25.

7. Un procédé selon la revendication 6, caractérisé en ce qu'on utilise les matières actives de formule I et II dans un rapport pondéral de 1:4 à 1:6.

8. Un procédé selon la revendication 6 ou 7, caractérisé en ce qu'on applique le mélange synergique dans une quantité de 15 à 600 litres/m³ de bois.

9. Un procédé selon la revendication 6, 7 ou 8, caractérisé en ce qu'on utilise des bouillies de pulvérisation qui contiennent de 1 à 100 g/litre du composé de formule I et de 5 à 500 g/litre d'un composé de formule II.

10. Utilisation d'une combinaison efficace du point de vue synergique des composés de formule I et II selon la revendication 1, pour lutter contre les champignons détruisant le bois, caractérisée en ce qu'on applique les matières actives ensemble ou l'une peu après l'autre.
